# EUROPEAN PATENT SPECIFICATION

(11) **EP 2 975 213 B1**
(45) Date of publication and mention of the grant of the patent: **02.05.2018**
(21) Application number: 15176856.1
(22) Date of filing: 15.07.2015
(51) Int. Cl.: F01D 1/18, F01D 1/24, F01D 9/06, F01D 5/14, F01D 25/16, F01D 1/20, F01D 1/26, F02K 3/072, F02C 3/04, F02C 7/06

(54) **GAS TURBINE ENGINE WITH VANELESS TRANSITION DUCT**
TURBOMASCHINE MIT LEITSCHAUFELFREIEN ÜBERGANGSKANAL
TURBOMOTEUR AVEC CANAL DE TRANSITION SANS AILETTES

(30) Priority: 15.07.2014 US 201462024659 P
(43) Date of publication of application: 20.01.2016
(73) Proprietor: United Technologies Corporation, Farmington, CT 06032 (US)
(72) Inventor: ROBERGE, Gary D, Tolland, 06084 (US)
(74) Representative: Leckey, David Herbert

(56) References cited:
- EP-A1- 1 533 473
- DE-A1- 3 842 962
- US-A- 3 703 081

## Description

### TECHNICAL FIELD

The present disclosure relates generally to gas turbine engines, and more particular to vaneless turbine section configurations for the same.

### BACKGROUND

Gas turbine engines for use in commercial aircraft include a compressor section that compresses air and provides the compressed air to a combustor along a primary fluid flowpath. The combustor receives fuel from an aircraft fuel system and ignites a mixture of fuel and compressed air. The combustion gasses resultant from the combustion are passed through a turbine section of the gas turbine engine, and drive stages within the turbine section to rotate. Each of the stages is connected to a shaft, and rotation of the turbine stages in turn drives rotation of the shaft.

The turbine section is divided into at least two sequential turbine portions, with combustion gasses flowing through the second turbine portion being at a lower pressure than combustion gasses flowing through the first turbine portion. The first turbine portion is connected to a first shaft and drives at least a high pressure portion of the compressor section. The second turbine portion is connected to a second shaft and drives at least a low pressure portion of the compressor section. The second shaft is positioned radially inward of the first shaft.

As the combustion gasses transition from the first turbine portion to the second turbine portion through a transition duct, exit swirl from the last airfoil in the first turbine portion can cause undesirable flow characteristics on the combustion gasses. In order to correct the flow characteristics, the transition duct between turbine sections in a typical gas turbine engine will include at least one flow correcting vane. The flow correcting vane in these examples has a cross section profile designed to counter the exit swirl of the last airfoil in the first turbine portion according to known principles.

US 3703081 discloses gas turbine engines characterized by a short axial length relative to diameter, attributable to a toroidal combustion chamber having a reversely folded combustion zone, a bearing system for counter-rotating engine rotors, a shell construction for a counter-rotating compressor, and a lubrication system employing a rotor shaft as the pumping elements.

### SUMMARY OF THE INVENTION

In one example, a gas turbine engine includes a compressor section, a combustor fluidly connected to the compressor section via a primary flowpath, a turbine section fluidly connected to the combustor via the primary flowpath, wherein the turbine section includes at least a first turbine portion and a second turbine portion connected to the first turbine portion via a transition duct, fluid in the second turbine portion having a lower pressure than fluid in the first turbine portion, and wherein the first turbine portion and the second turbine portion are counter-rotating turbine portions, wherein the second turbine portion includes at least three turbine stages, wherein the transition duct is vaneless, and wherein the first turbine portion and the second turbine portion are counter rotating turbine portions.

An embodiment of the previous example includes a static support structure disposed aft of a first stage of the second turbine portion and fore of a last stage of the second turbine portion.

In a further embodiment of any of the previous examples, the static support structure is disposed between the first stage of the second turbine section and a second stage of the second turbine section.

In a further embodiment of any of the previous examples, the static support structure is directly connected to an outer diameter of the primary flowpath and the static support structure is connected to a second shaft via a bearing.

In a further embodiment of any of the previous examples, the first turbine portion drives a first shaft and the second turbine portion drives a second shaft, and the first shaft is supported relative to the second shaft via a piggyback intershaft bearing arrangement.

In a further embodiment of any of the previous examples, the second turbine portion includes exactly three turbine stages.

A further embodiment of the previous example includes a turbine exhaust case connected to a fluid exit of the second turbine portion.

In a further embodiment of any of the previous examples, the turbine exhaust case is supported relative to a second shaft via at least a first support wall and a bearing.

An example of a gas turbine engine according to the present disclosure includes a compressor portion, a combustor fluidly connected to the compressor portion, a turbine section fluidly connected to the combustor, wherein the turbine section includes at least a first turbine portion and a second turbine portion connected to the first turbine portion via a transition duct, fluid in the second turbine portion having a lower pressure than fluid in the first turbine portion, wherein the second turbine portion is a split turbine portion and a static support structure is disposed within the split turbine portion, and wherein the transition duct is vaneless.

In a further embodiment of any of the previous examples, the second turbine portion includes at least three turbine stages.

In a further embodiment of any of the previous examples, the first turbine portion and the second turbine portion are counter rotating turbine portions.

In a further embodiment of any of the previous examples, the static support structure is disposed between the first stage of the second turbine portion and a second stage of the second turbine portion.

In a further embodiment of any of the previous examples, the static support structure is directly connected to an outer diameter of the primary flowpath and the static support structure is connected to a second shaft via a bearing.

In a further embodiment of any of the previous examples, the first turbine portion drives a first shaft and the second turbine portion drives a second shaft, and the first shaft is supported relative to the second shaft via a piggy back bearing arrangement.

In a further embodiment of any of the previous examples, the second turbine portion includes exactly three turbine stages.

A further embodiment of the previous example, includes a turbine exhaust case connected to a fluid exit of the second turbine portion.

In a further embodiment of any of the previous examples, the turbine exhaust case is supported relative to a second shaft via at least a first support wall and a bearing.

These and other features of the present invention can be best understood from the following specification and drawings, the following of which is a brief description.

### BRIEF DESCRIPTION OF THE DRAWINGS

Figure 1 schematically illustrates an exemplary gas turbine engine.
Figure 2 schematically illustrates a first example turbine section.
Figure 2A schematically illustrates a cross sectional view of a portion of Figure 2.
Figure 3 schematically illustrates a second example turbine section.
Figure 3A schematically illustrates a cross sectional view of a portion of Figure 3.
Figure 4 schematically illustrates an alternate configuration of the second example turbine section.

### DETAILED DESCRIPTION OF AN EMBODIMENT

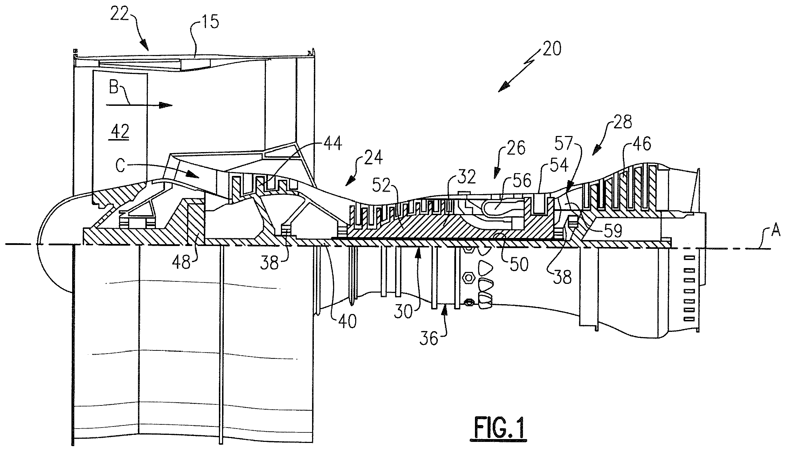

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10668 m). The flight condition of 0.8 Mach and 35,000 ft (10668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °C) / (15.01 °C)]0.5 ([(Tram °R) / (518.7 °R)]0.5). The "Low corrected fan tip speed" as disclosed herein according to one non-limiting embodiment is less than about 1150 ft / second (350.5 m / s).

In some example gas turbine engines 20, the low pressure turbine 56 rotates at a speed that is approximately 40-50% or higher of the rotational speed of the high pressure turbine 54. In other examples, the low pressure turbine rotational speed can be even closer to the high pressure turbine rotational speed. A low pressure turbine 56 operating in this speed range is referred to as a high speed low turbine. The high speed low turbine in engine 20 is enabled by the use of a geared architecture that drives a fan at a desired lower speed than the rotational speed of the low turbine.

The radius of the high spool and low spool turbine modules, when designed to rotate at substantially similar speeds, enables the utilization of radially similar low and high spool turbines. That is to say, the radial distances of the flowpath through both the last stage of the high spool turbine and first stage of the low spool turbine from an engine axis are similar. The reduced radial differences, as compared with typical designs having larger radial difference between turbine modules, provides more optimal flow characteristics through the engine core.

A further result of the radially similar low and high spool turbines is a reduced length of a transition duct connecting the flowpaths of the low and high spool turbines. As a result of the reduced length of the transition duct and counter-rotating nature of the two turbine modules, the rotors in the first stage of the low spool turbine are sufficient to provide flow correction to the gasses traveling from the high spool turbine to the low spool turbine, and no static flow correcting vanes are required within the transition duct. Due to the absence of flow correcting vanes within the transition duct, the transition duct is referred to as being "vaneless". In a turbine engine including a vaneless transition duct, the last spinning blade on the high pressure turbine 54 directly feeds combustion gas products into a counter-rotating low pressure turbine 56 inlet.

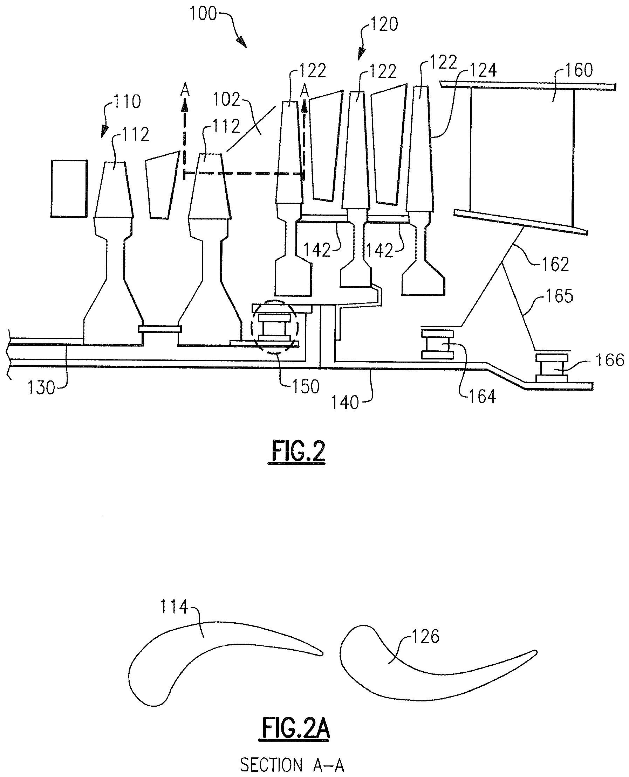

Figure 2 illustrates an example turbine section 100, such as could be utilized as the turbine section 28 of the example of Figure 1. The example turbine section 100 includes a first turbine portion 110 and a second turbine portion 120 connected by a transition duct 102. Fluid flowing through the first turbine portion 110 is at a high pressure relative to fluid flowing through the second turbine portion 120. Each turbine portion 110, 120 includes multiple sets of rotors 112, 122, with each set of rotors 112, 122 being a stage of the corresponding turbine portion 110, 120.

The rotors 112 in the first turbine portion or high pressure turbine 110 are connected to a first shaft 130, and drive the first shaft 130 to rotate as combustion gasses are expanded and reacted through the turbine 110. Similarly, the rotors 122 in the second portion or low pressure turbine are connected to a second shaft 140, and drive the second shaft 140 to rotate as combustion gasses are further expanded and reacted through the second turbine 120. Each of the rotors 122 in the second portion 120 are connected to each other via mechanically fastened or bonded joints in disk arms 142, and only a single stage of the rotors 122 is connected to the second shaft 140. In the illustrated example, the connected rotors 122 are the rotors 122 in the aftmost stage. The first and second shaft 130, 140 are supported relative to each other via a "piggy back" intershaft bearing arrangement 150. While the first stage turbine 110 is illustrated herein as having two stages and second turbine portion 120 is illustrated herein as having three stages, it is understood that additional stages may be included depending on the needs of a particular gas turbine engine. In alternative examples, the high pressure turbine section 54 is "overhung" using a bearing support in a diffuser or combustor case.

Positioned at a flowpath exit 124 of the turbine section 100 is a turbine exhaust case 160. The exhaust case 160 includes an outer diameter ring, inner diameter ring and intermittent local struts bridging flowpath from the inner diameter to the outer diameter. The turbine exhaust case 160 directs exhaust gasses from the turbine section 100 away from the gas turbine engine 20 and provides a structural support for the low shaft rotor bearing load. The turbine exhaust case 160 is supported by a turbine exhaust case mounted bearing support 162, and a bearing 164. In some example engines, the turbine exhaust case requires an additional optional support wall 165, and a second bearing support 166.

The first turbine portion 110 rotates about an engine axis in a first direction, while the second turbine portion 120 rotates in the opposite direction. Figure 2A illustrates a cross sectional view of the last rotor stage 112 of the first turbine portion and the first rotor stage 122 of the second turbine portion. One of skill in the art, having the benefit of this disclosure, will understand that the airfoil profiles 114 of the rotors 112 in the first turbine portion 110 are generally opposite the airfoil profiles 126 of the rotors 122 in the second turbine portion 120. The opposing airfoil profiles 114, 126 drives the turbine portions 110, 120 to counter rotate.

In some example gas turbine engines, additional structural support is need to support the turbine rotors and/or the structures defining the fluid flowpath, and/or the engine case surrounding the turbine section. In such an example, a static support structure is included in the turbine section to provide the support.

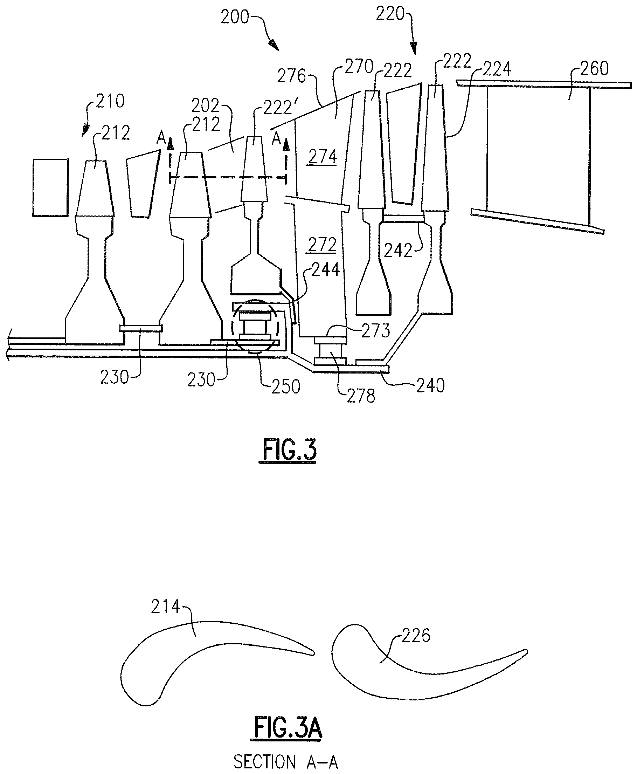

With continued reference to Figures 1, 2 and 2A, and with like numerals indicating like elements, Figure 3 illustrates a turbine section 200 including a static structural support 270. As with the example of Figure 2, the example turbine section 200 includes a first turbine portion 210 and a second turbine portion 220 connected by a transition duct 202. Fluid flowing through the first turbine portion 210 is at a high pressure relative to fluid flowing through the second turbine portion 220. Each turbine portion 210, 220 includes multiple sets of rotors 212, 222, with each set of rotors 212, 222 being a stage of the corresponding turbine portion 210, 220.

The rotors 212 in the first turbine portion 210 are connected to a first shaft 230, and drive the first shaft 230 to rotate. Similarly, the rotors 222 in the second turbine portion 220 are connected to a second shaft 240, and drive the second shaft 240 to rotate. Furthermore, as in Figures 1, 2 and 2A, the transition duct 202 does not include flow correcting vanes.

Unlike the example of Figure 2, the second turbine portion 220 in the example of Figure 3 is split by the presence of the static support structure 270, and is referred to as a split turbine portion. The second turbine portion 220 is split between a group of rotors 222' fore of the static support structure 270 that are mechanically fastened or bonded to shaft 240 and a group of rotors 222 aft of the static support structure. Each of the rotors 222 in the group of rotors aft of the static support structure 270 are connected via one or more mechanically fastened or bonded joints in disk arms 242, and a single rotor 222 is connected to the second shaft 240.

Each rotor 222' in the group of rotors fore of the static support structure 270 is connected to the second shaft 240 via a connection hub 244. The connection hub 244 also includes provisions for an intershaft or 'piggy back" bearing arrangement 250 where the radial load from the first turbine 201 is reacted by the attachment hub 244 and shaft 240. In example engines where more than one stage of rotors 222' is fore of the static support structure 270, each of the rotors 222' can be connected via a connection similar to the connection 242 connecting the rotors 222 aft of the static support structure 270.

The static support structure 270 includes an inward portion 272 disposed radially inward of the flowpath through the second turbine portion 220 and an outward portion 274 with local intermittently spaced airfoil shaped struts that passes through the flowpath of the second turbine portion 220. Airfoil shaped struts act to de-swirl the flow leaving airfoil in turbine 220 as it enters the first airfoil row in turbine 220. The static support structure 270 is connected to an outer diameter of the flowpath at a radially outermost edge 276 of the static support structure 270, and to a bearing 278 at a radially innermost edge 273 of the static support structure 270. Because support structure 270 is located aft of the first rotor 222' extracting work from the combusted gas products, the operating environment temperature and pressure are less severe than the conditions at the entrance of the vaneless turbine 222'. This results in increased design flexibility in the use of lower temperature materials for support structure 270. This also reduces the challenges associated with thermal management of fluids and services for bearing locations 250 and 278 that traverse the flowpath through radial struts in 274.

Positioned at a flowpath exit 224 of the turbine engine is a turbine exhaust case 260. The turbine exhaust case 260 directs exhaust gasses from the turbine section 200 away from the gas turbine engine 20. In the example of Figure 3, the packaging of turbines 210 and 220 is such that the spacing of bearing arrangements 250 and 278 result in systems rotor dynamics that do not require an additional bearing support in the turbine exhaust case 260. This results in a significantly smaller, lighter and simpler turbine exhaust case 260 with accompanying system level benefits.

The first turbine portion 210 rotates about an engine axis in a first direction, while the second turbine portion 220 rotates in the opposite direction. Figure 3A illustrates a cross sectional view of the last rotor stage 212 of the first turbine portion 210 and the first rotor stage 222' of the second turbine portion 220. One of skill in the art, having the benefit of this disclosure, will understand that the airfoil profiles 214 of the rotors 212 in the first turbine portion 210 are opposite the airfoil profiles 226 of the rotors 222 in the second turbine portion 220. The opposing airfoil profiles 214, 226 is the feature that drives the turbine portions 210, 220 to counter rotate.

As with the example of Figure 2, there is a small elevation difference between the first turbine portion 210 and the second turbine portion 220 requiring a transitional duct 202. The small elevation distance, however, ensures that the transitional duct 202 is sufficiently short that no flow correcting vanes are required within the transitional duct 202. As such, the illustrated turbine section 200 of Figure 3 is a vaneless turbine section 200.

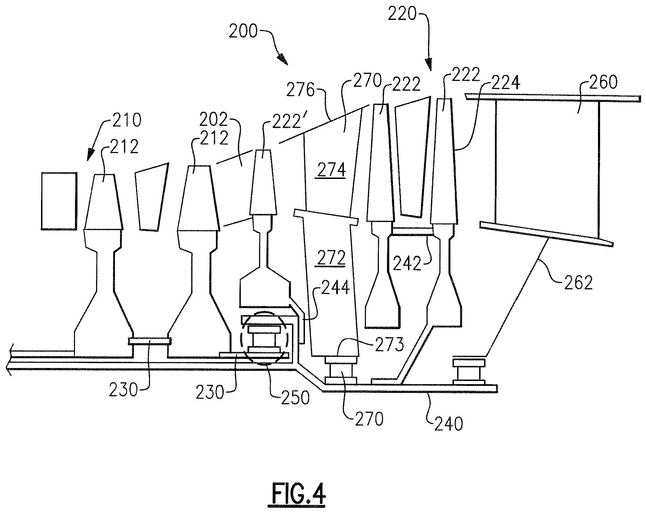

With continued reference to Figures 3 and 3A, and with like numerals indicating like elements, Figure 4 illustrates an alternate example gas turbine engine including all the features of Figures 3 and 3A with an alteration to the turbine exhaust case 260. In the example of Figure 4, the turbine exhaust case 260 includes an additional structural support in the form of a structural bearing support 262 and a bearing 264. In some example gas turbine engines, the combined turbine 210 and 220 may be longer or heavier than in the example of Figure 3 as a result of the selected engine cycle and the number of turbine stages required to extract the desired work in an efficient manner. The increased length or weight results in engine system rotor dynamics that necessitate the addition of a rear bearing 264, the additional structural supports illustrated in the example of Figure 4 can be required.

While illustrated and described herein as a two spool gas turbine engine including only a high pressure turbine section and a low pressure turbine section, it is understood that the same vaneless transition duct and static support structures described above can be applied equally to a transition duct between an intermediate turbine and a low pressure turbine or high and intermediate turbine in a three spool gas turbine engine.

It is further understood that any of the above described concepts can be used alone or in combination with any or all of the other above described concepts. Although an embodiment of this invention has been disclosed, a worker of ordinary skill in this art would recognize that certain modifications would come within the scope of this invention. For that reason, the following claims should be studied to determine the true scope and content of this invention.

## Claims

1. A gas turbine engine (20) comprising:
a compressor portion (24);
a combustor (26) fluidly connected to the compressor portion;
a turbine section (200) fluidly connected to the combustor (26), wherein
the turbine section (200) includes at least a first turbine portion (210) and a second turbine portion (220) connected to the first turbine portion (210) via a transition duct (202), fluid in the second turbine portion (220) having a lower pressure than fluid in the first turbine portion (210); **characterized in that** the second turbine portion (220) is a split turbine portion and a static support structure (270) is disposed within the split turbine portion; and
wherein the transition duct (202) is vaneless.

2. The gas turbine engine of claim 1, wherein the second turbine portion (220) includes at least three turbine stages.

3. The gas turbine engine of claim 1 or 2, wherein the first turbine portion (210) and the second turbine portion (220) are counter rotating turbine portions.

4. The gas turbine engine of any of claims 1 to 3, wherein the static support structure (270) is disposed between said first stage of the second turbine portion (220) and a second stage of the second turbine portion (220).

5. The gas turbine engine of any of claims 1 to 4, wherein the static support structure (270) is directly connected to an outer diameter of the primary flowpath and wherein the static support structure (270) is connected to a second shaft (140; 240) via a bearing (278).

6. The gas turbine engine of any preceding claim, wherein the first turbine portion (110; 210) drives a first shaft (130; 230) and the second turbine portion (120; 220) drives a second shaft (140; 240), and wherein the first shaft (130; 230) is supported relative to the second shaft (140; 240) via a piggyback intershaft bearing arrangement.

7. The gas turbine engine of any preceding claim, wherein the second turbine portion (120; 220) includes exactly three turbine stages.

8. The gas turbine engine of any preceding claim, further comprising a turbine exhaust case (160; 260) connected to a fluid exit of the second turbine portion (120; 220).

9. The gas turbine engine of claim 8, wherein the turbine exhaust case (160; 260) is supported relative to a second shaft (240) via at least a first support wall and a bearing.

## Patentansprüche

1. Gasturbinenmotor (20), umfassend:
einen Kompressorabschnitt (24);
eine Brennkammer (26), die in Fluidverbindung mit dem Kompressorabschnitt steht;
einen Turbinenabschnitt (200), der in Fluidverbindung mit der Brennkammer steht; wobei
der Turbinenabschnitt (200) mindestens einen ersten Turbinenabschnitt (210) und einen zweiten Turbinenabschnitt (220), der über einen Übergangskanal (202) mit dem ersten Turbinenabschnitt (210) verbunden ist, einschließt, wobei das Fluid im zweiten Turbinenabschnitt (220) einen geringeren Druck aufweist als das Fluid im ersten Turbinenabschnitt (210) ;
**dadurch gekennzeichnet, dass**:
der zweite Turbinenabschnitt (220) ein gespaltener Turbinenabschnitt ist und eine statische Stützstruktur (270) innerhalb des gespaltenen Turbinenabschnitts angeordnet ist; und
wobei der Übergangskanal (202) schaufelfrei ist.

2. Gasturbinenmotor nach Anspruch 1, wobei der zweite Turbinenabschnitt (220) mindestens drei Turbinenstufen einschließt.

3. Gasturbinenmotor nach Anspruch 1 oder 2, wobei der erste Turbinenabschnitt (210) und der zweite Turbinenabschnitt (220) gegenläufig rotierende Turbinenabschnitte sind.

4. Gasturbinenmotor nach einem der Ansprüche 1 bis 3, wobei die statische Stützstruktur (270) zwischen der ersten Stufe des zweiten Turbinenabschnitts (220) und einer zweiten Stufe des zweiten Turbinenabschnitts (220) angeordnet ist.

5. Gasturbinenmotor nach einem der Ansprüche 1 bis 4, wobei die statische Stützstruktur (270) direkt mit einem äußeren Durchmesser des primären Strömungspfads verbunden ist und wobei die statische Stützstruktur (270) über ein Lager (278) mit einer zweiten Welle (140; 240) verbunden ist.

6. Gasturbinenmotor nach einem der vorhergehenden Ansprüche, wobei der erste Turbinenabschnitt (110; 210) eine erste Welle (130; 230) antreibt und der zweite Turbinenabschnitt (120; 220) eine zweite Welle (140; 240) antreibt und wobei die erste Welle (130; 230) relativ zur zweiten Welle (140; 240) über eine Huckepack-Zwischenwellenlageranordnung abgestützt wird.

7. Gasturbinenmotor nach einem der vorhergehenden Ansprüche, wobei der zweite Turbinenabschnitt (120; 220) genau drei Turbinenstufen einschließt.

8. Gasturbinenmotor nach einem der vorhergehenden Ansprüche, ferner umfassend ein Turbinenabgasgehäuse (160; 260), das mit einem Fluidausgang des zweiten Turbinenabschnitts (120; 220) verbunden ist.

9. Gasturbinenmotor nach Anspruch 8, wobei das Turbinenabgasgehäuse (160; 260) relativ zu einer zweiten Welle (240) über mindestens eine erste Stützwand und ein Lager abgestützt ist.

## Revendications

1. Turbomoteur à gaz (20) comprenant :
une partie de compresseur (24) ;
une chambre de combustion (26) reliée fluidiquement à la partie de compresseur ;
une section de turbine (200) reliée fluidiquement à la chambre de combustion ; dans lequel
la section de turbine (200) inclut au moins une première partie de turbine (210) et une seconde partie de turbine (220) reliée à la première partie de turbine (210) via un canal de transition (202), le fluide dans la seconde partie de turbine (220) ayant une pression inférieure au fluide dans la première partie de turbine (210) ;
**caractérisé en ce que** :
la seconde partie de turbine (220) est une partie de turbine fractionnée et une structure de support statique (270) est disposée à l'intérieur de la partie de turbine fractionnée; et
dans lequel le canal de transition (202) est sans ailettes.

2. Turbomoteur à gaz selon la revendication 1, dans lequel la seconde partie de turbine (220) inclut au moins trois étages de turbine.

3. Turbomoteur à gaz selon la revendication 1 ou 2, dans lequel la première partie de turbine (210) et la seconde partie de turbine (220) sont des parties de turbine tournant en sens inverses.

4. Turbomoteur à gaz selon l'une quelconque des revendications 1 à 3, dans lequel la structure de support statique (270) est disposée entre ledit premier étage de la seconde partie de turbine (220) et un second étage de la section partie de turbine (220).

5. Turbomoteur à gaz selon l'une quelconque des revendications 1 à 4, dans lequel la structure de support statique (270) est directement reliée à un diamètre extérieur de la voie d'écoulement principale et dans lequel la structure de support statique (270) est reliée à un second arbre (140 ; 240) via un roulement (278).

6. Turbomoteur à gaz selon une quelconque revendication précédente, dans lequel la première partie de turbine (110 ; 210) entraîne un premier arbre (130 ; 230) et la seconde partie de turbine (120 ; 220) entraîne un second arbre (140 ; 240), et dans lequel le premier arbre (130 ; 230) est supporté par rapport au second arbre (140 ; 240) via un agencement de roulement inter-arbre auxiliaire.

7. Turbomoteur à gaz selon une quelconque revendication précédente, dans lequel la seconde partie de turbine (120 ; 220) inclut exactement trois étages de turbine.

8. Turbomoteur à gaz selon une quelconque revendication précédente, comprenant en outre un carter d'échappement de turbine (160 ; 260) relié à une sortie de fluide de la seconde partie de turbine (120 ; 220).

9. Turbomoteur à gaz selon la revendication 8, dans lequel le carter d'échappement de turbine (160 ; 260) est supporté par rapport à un second arbre (240) via au moins une première paroi de support et un roulement.
